# EUROPÄISCHE PATENTANMELDUNG

(11) **EP 2 292 982 A2**
(43) Veröffentlichungstag der Anmeldung: **09.03.2011**
(21) Anmeldenummer: 10169345.5
(22) Anmeldetag: 13.07.2010
(51) Int. Cl.: F24D 3/08, F24D 11/00

(54) **Wärmeversorgungssystem**

(30) Priorität: 24.07.2009 DE 102009034657
(71) Anmelder: Robert Bosch GmbH, 70442 Stuttgart (DE)
(72) Erfinder: Bubacz, Rainer, 48432 Rheine (DE); Mueller, Gerald, 48565 Steinfurt (DE); Pampel, Marcus, 48282 Emsdetten (DE); Eisen, Thomas, 48493 Wettringen (DE); Schulte, Uwe, 20144 Hamburg (DE); Warzecha, Andreas, 35460 Staufenberg (DE)

(57) **Zusammenfassung**

Die Erfindung betrifft ein Wärmeversorgungssystem mit einem zentralen Pufferspeicher als Wärmespeicher für solare und fossil erzeugte Energie und als Wärmequelle für Trinkwasserbereitung, Heizungsunterstützung, Prozesswärme, Kühlanlagen oder Schwimmbadwassererwärmung, mit einem Ein- und Auslassstutzen für einen Solarkreislauf im unteren Höhenbereich des Pufferspeichers, mit einem Ein- und Auslassstutzen für einen Kreislauf über einen konventionellen Wärmeerzeuger im oberen Höhenbereich des Pufferspeichers, mit einem Kreislauf über eine Frischwasserstation mit einem Plattenwärmetauscher zur Trinkwasserbereitung und einem dafür vorgesehenen Auslassstutzen im oberen und einen Einlassstutzen im unteren Höhenbereich des Pufferspeichers, mit einem Ein- und Auslassstutzen für einen Heizungskreislauf im mittleren Höhenbereich, sowie mit einer Umgehungsleitung zur Umgehung des Pufferspeichers und direkten Überleitung der konventionell erzeugten Wärme in den Heizkreislauf, wobei in der Vorlaufleitung vom konventionellen Wärmeerzeuger zum Pufferspeicher ein erstes Umschaltventil und in der aus dem Pufferspeicher kommenden Vorlaufleitung für den Heizkreislauf ein zweites Umschaltventil mit Anschluss an die Umgehungsleitung vorgesehen ist, um die Wasserströmung wahlweise über den Pufferspeicher oder die Umgehungsleitung zu leiten.

Es ist eine Aufgabe der Erfindung, ein Wärmeversorgungssystem für eine effektive Wärmebereitstellung für Trinkwasser und Heizung unter Einbindung von regenerativen und konventionellen Wärmeerzeugern zu schaffen.

Gekennzeichnet ist das Wärmeversorgungssystem dadurch, dass mindestens eine Verbindungsleitung mit einem Überströmventil (Ü, Ü') zwischen mindestens einer in den oder aus dem oberen Höhenbereich des Pufferspeichers (P) führenden Leitung, welche beim Betrieb der Frischwasserstation (F) zur Trinkwasserbereitung durchströmt wird, und der Vorlaufleitung (H_VL) für den Heizkreislauf vorgesehen ist.

## Beschreibung

Die Erfindung betrifft ein Wärmeversorgungssystem nach dem Oberbegriff des Patentanspruches 1.

Aus dem Stand der Technik sind Anlagen zur Trinkwassererwärmung und Heizungsunterstützung mittels Rücklauftemperaturanhebung allgemein bekannt. Diese haben üblicherweise einen zentralen Pufferspeicher, welcher einerseits als Wärmespeicher für solare Energie und fossil erzeugte Energie dient, und andererseits als Wärmequelle für Trinkwassererwärmung und Heizungsunterstützung vorgesehen ist. Weiterhin kommen gattungsgemäße Wärmeversorgungssysteme auch für Prozesswärmebereitstellung, Kühlanlagenanwendungen oder Schwimmbadwassererwärmung zum Einsatz.

In der Regel ist ein derartiger Pufferspeicher in drei Bereiche aufgeteilt, nämlich einen oberen Teil zur Trinkwassererwärmung, einen mittleren Teil zur Heizungsunterstützung und einen unteren Teil für die solare Beladung, also für einen Wärmetausch auf einem möglichst niedrigen Temperaturniveau.

Bei einer Rücklauftemperaturanhebung für einen angeschlossenen Heizungskreislauf, eine sogenannte Pufferbypassschaltung, wird die Temperatur des Heizungsrücklaufs mit der Temperatur im mittleren Teil des Pufferspeichers verglichen. Wenn die Temperatur des Heizungsrücklaufs geringer als die Temperatur im mittleren Teil des Pufferspeichers ist, leitet ein Umschaltventil den kälteren Heizungsrücklauf in den mittleren Teil des Pufferspeichers. Anstelle des kälteren Heizungsrücklaufs wird dann das wärmere Wasser aus dem mittleren Teil des Pufferspeichers zum Heizkessel geleitetet, so dass dadurch der Heizkessel nur einen relativ geringeren Anteil an fossiler Energie zur Nacherwärmung zur Verfügung stellen muss. Ein wesentlicher Nachteil dieses Systems ist allerdings, dass der Heizkessel immer durchströmt wird. Außerdem kann es sich auch negativ auswirken, wenn bei geringfügig kälterem Heizungsrücklauf, und dadurch vergleichsweise geringem Energiegewinn, der Heizungsrücklauf durch den Pufferspeicher geführt wird. Dadurch wird der Pufferspeicher durchmischt und die vorhandene Temperaturschichtung zerstört.

Weiterhin sind Anlagen zur Trinkwassererwärmung und Heizungsbereitung mit einem sogenannten Pendelspeicher bekannt. Dabei dient ein zentraler Pufferspeicher als Wärmequelle für Trinkwassererwärmung und der Kopf des Pufferspeichers wird ständig mit konventionell erzeugter Wärme für die Trinkwasserbereitung auf der geforderten Temperatur gehalten. Auch dabei steht der mittlere Höhenbereich des Pufferspeichers für die Heizungswassererwärmung zur Verfügung. Ein Umschaltventil leitet nach abgeschlossener Erwärmung des oberen Pufferspeicherbereiches, also nach Sicherstellung des geforderten Trinkwasser-Bereitungs-Temperaturniveaus, die vom Heizkessel erzeugte Energie in den mittleren Pufferteil, wobei davon der angeschlossene Heizungskreislauf parallel wieder einen Teilvolumenstrom abzieht. Wenn der mittlere Höhenbereich des Pufferspeichers das Temperaturniveau der Heizungswasserbereitung erreicht hat, stoppt die konventionelle Erwärmung und der Heizungskreislauf zieht seinen geforderten Volumenstrom ausschließlich aus dem Pufferspeicher. Der Hauptvorteil bei dieser Lösung liegt darin, dass das konventionelle Heizgerät, in der Regel ein mit fossilen Brennstoffen befeuerter Heizkessel, nicht ständig durchströmt wird. Dies geschieht nur, wenn die geforderten Temperaturen im Pufferspeicher zu niedrig sind und die konventionelle Nachheizung aktiv ist. Nachteilig ist aber, dass der größte Teil des Pufferspeichers durch Energie aus fossilen Brennstoffen auf der geforderten Temperatur gehalten werden muss. Die Möglichkeiten, beispielsweise solar erzeugte Wärme auf einem niedrigen Temperaturniveau im unteren Bereich des Pufferspeichers einzuspeisen, werden dadurch eingeschränkt.

Der Erfindung liegt daher die Aufgabe zugrunde, ein Wärmeversorgungssystem für eine effektive Wärmebereitstellung für Trinkwasserbereitung, Heizungsunterstützung, Prozesswärme, Kühlanlagen oder Schwimmbadwassererwärmung, unter Einbindung von regenerativen und konventionellen Wärmeerzeugern zu schaffen.

Erfindungsgemäß wird dies mit den Merkmalen des Patentanspruches 1 gelöst. Vorteilhafte Weiterbildungen sind den Unteransprüchen zu entnehmen.

Das erfindungsgemäße Wärmeversorgungssystem ist **dadurch gekennzeichnet, dass** mindestens eine Verbindungsleitung mit einem Überströmventil zwischen mindestens einer in den oder aus dem oberen Höhenbereich des Pufferspeichers führenden Leitung, welche beim Betrieb der Frischwasserstation zur Trinkwasserbereitung durchströmt wird, und der Vorlaufleitung für den Heizkreislauf vorgesehen ist.

In einer ersten Ausführungsform der Erfindung ist vorgesehen, dass eine Verbindungsleitung mit einem Überströmventil zwischen der aus dem oberen Höhenbereich des Pufferspeichers ausmündenden Vorlaufleitung zur Frischwasserstation und der Umgehungsleitung angeordnet ist.

In einer zweiten alternativen Ausführungsform der Erfindung ist stromabwärts hinter dem ersten Umschaltventil eine Verbindungsleitung mit einem Überströmventil zwischen der in den oberen Höhenbereich des Pufferspeichers einmündenden Vorlaufleitung des Kreislaufs über einen konventionellen Wärmeerzeuger und der Umgehungsleitung vorgesehen.

Mit dem erfindungsgemäßen Wärmeversorgungssystem dient ein zentraler Pufferspeicher als Wärmespeicher für solare und fossil erzeugte Energie und als Wärmequelle für Trinkwasserbereitung und Heizungsunterstützung. Es wird erreicht, dass der Pufferspeicher als Pendelspeicher dient, ohne dass speziell ein Heizungswasservolumen bevorratet wird. Besonders durch das Überströmventil nach dem Speicher, also auf der Entnahmeseite, zieht der Heizungskreislauf, je nach Ladezustand des Pufferspeichers, kälteres und dadurch dem Bedarfs-Temperaturniveau des Heizkreislaufes angepasstes Wasser. Insgesamt ergibt sich somit ein effektives Wärmeversorgungssystem unter Einbindung von regenerativen und konventionellen Wärmeerzeugern.

Die Zeichnung stellt ein Ausführungsbeispiel der Erfindung dar. Es zeigt jeweils schematisch ein Wärmeversorgungssystem in zwei Ausführungsvarianten:
- Fig. 1:: mit einer Verbindungsleitung mit einem Überströmventil auf der Entnahmeseite des Pufferspeichers und
- Fig. 2:: mit einer Verbindungsleitung mit einem Überströmventil auf der Wärme- Einspeisungsseite des Pufferspeichers.

Das Wärmeversorgungssystem besitzt einen zentralen Pufferspeicher P als Wärmespeicher für solare und fossil erzeugte Energie und im dargestellten Ausführungsbeispiel als Wärmequelle für Trinkwasserbereitung und Heizungsunterstützung. Am Pufferspeicher sind Ein- und Auslassstutzen für einen Solarkreislauf mit einer Solar-Vorlaufleitung S_VL und einer Solar-Rücklaufleitung S_RL im unteren Höhenbereich angebracht. Ein- und Auslassstutzen für einen Kreislauf mit einer Vorlaufleitung K_VL und einer Rücklaufleitung K_RL über einen konventionellen Wärmeerzeuger befinden sich im oberen Höhenbereich des Pufferspeichers.

Die Trinkwasserbereitung erfolgt mit einem Kreislauf über eine Frischwasserstation F mit einem Plattenwärmetauscher, Warmwasserleitungsanschluss WW, Zirkulationsleitungsanschluss Z sowie Kaltwasserleitungsanschluss KW, wobei die dafür vorgesehene Vorlaufleitung TW_VL an einem Auslassstutzen im oberen Höhenbereich des Pufferspeichers und die Rücklaufleitung TW_RL an einem Einlassstutzen im unteren Höhenbereich des Pufferspeichers angeschlossen ist.

Im mittleren Höhenbereich des Pufferspeichers befinden sich auf der Entnahmeseite jeweils ein Ein- und Auslassstutzen für einen Heizungskreislauf mit Heizungsvorlaufleitung H_VL und Heizungsrücklaufleitung H_RL.

Eine Umgehungsleitung U dient zur Umgehung des Pufferspeichers P und direkten Überleitung der konventionell erzeugten Wärme in die Heizungsvorlaufleitung H_VL, wobei in der Vorlaufleitung vom konventionellen Wärmeerzeuger zum Pufferspeicher ein erstes Umschaltventil V1 und in der aus dem Pufferspeicher P kommenden Heizungsvorlaufleitung H_VL ein zweites Umschaltventil V2 mit Anschluss an die Umgehungsleitung U angeordnet ist, um die Wasserströmung wahlweise über den Pufferspeicher P oder die Umgehungsleitung U zu leiten.

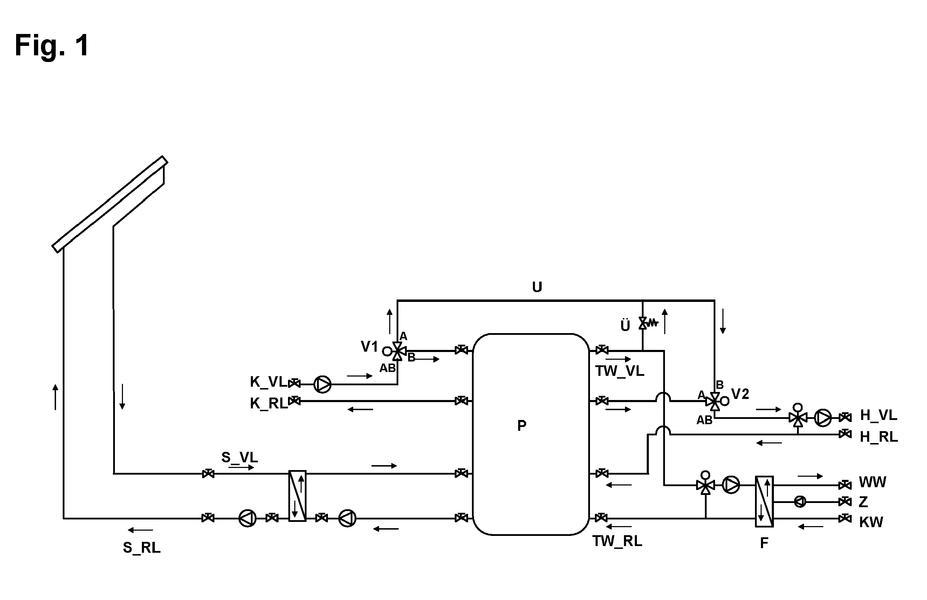

Gemäß Fig. 1 ist eine Verbindungsleitung mit einem Überströmventil Ü auf der Entnahmeseite des Pufferspeichers P angeordnet. Bei Trinkwassererwärmungsbetrieb zieht die Frischwasserstation die erforderliche Energie aus dem oberen Teil des Pufferspeichers P über die Vorlaufleitung TW_VL.

Wenn der Pufferspeicher im mittleren Teil warm genug ist, ist das Ventil V2 in Stellung A-AB und der Heizungskreislauf erhält die erforderliche Energie aus dem Pufferspeicher P. Ist der mittlere Teil des Pufferspeichers P nicht warm genug für die Heizwasserbereitung, so schaltet das Ventil V2 den Weg B-AB, zieht also Wasser aus der Umgehungsleitung U. Ist jetzt der obere Teil des Pufferspeichers P nicht warm genug für die Trinkwasserbereitung, schaltet das Ventil V1 den Weg AB-B frei, damit der obere Teil des Pufferspeichers P mit Wärme aus der Vorlaufleitung K_VL vom konventionellen Wärmeerzeuger aufgeheizt wird. Der Heizungskreislauf zieht nun den benötigten Volumenstrom über die Verbindungsleitung mit einem Überströmventil Ü aus dem Abzweig nach dem Pufferspeicher P aus der Vorlaufleitung TW_VL zur Frischwasserstation. Hierbei wird deutlich, dass der Pufferspeicher P nur als Pendelspeicher, ohne spezielle Bevorratung von Heizungswasservolumen, dient. Durch das Überströmventil Ü nach dem Pufferspeicher P zieht der Heizungskreislauf, je nach Ladezustand des Pufferspeichers P, kälteres und dadurch dem Bedarf des Heizungskreislaufs angepasst temperiertes Wasser.

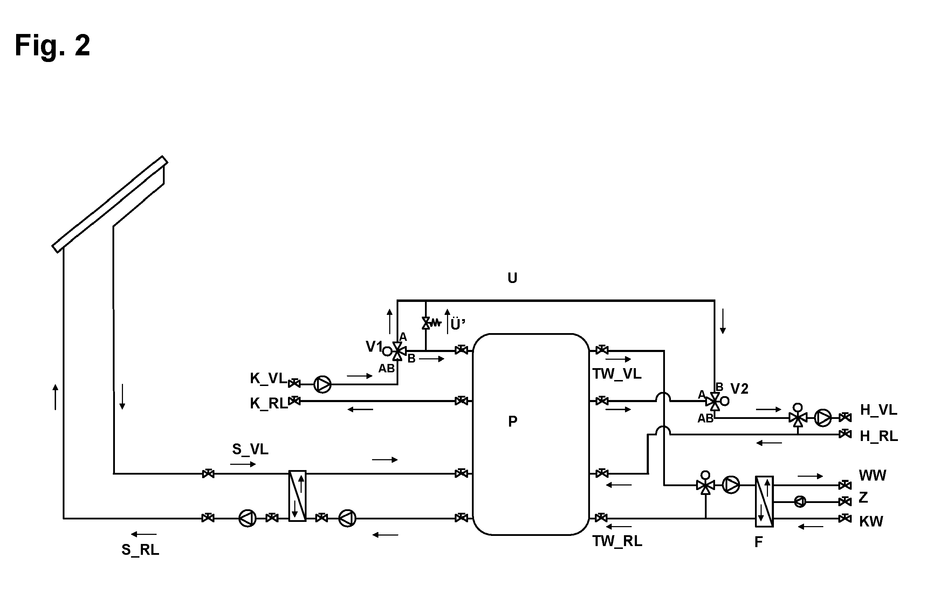

Gemäß Fig. 2 befindet sich eine Verbindungsleitung mit einem Überströmventil Ü' auf der Wärme-Einspeisungsseite des Pufferspeichers P. Damit wird eine Parallelschaltung von Trinkwassererwärmung und Heizwärmebereitstellung erreicht. Ist in diesem Fall der obere Teil des Pufferspeichers P nicht warm genug für die Trinkwasserbereitung, so schaltet auch das Ventil V1 den Weg AB-B frei, um den oberen Teil des Pufferspeichers P mit Wärme aus der Vorlaufleitung K_VL vom konventionellen Wärmeerzeuger aufzuheizen. Der Heizungskreislauf zieht nun aber den benötigten Volumenstrom über die Umgehungsleitung U und die Verbindungsleitung mit einem Überströmventil Ü' schon vor dem Pufferspeicher P ab, nämlich aus einem Abzweig nach dem ersten Ventil V1, aus dem Teilstück der Vorlaufleitung K_VL vom konventionellen Wärmeerzeuger zum Pufferspeicher P. Auch dabei dient der Pufferspeicher P nur als Pendelspeicher, ohne dass speziell Heizungswasservolumen bevorratet wird.

## Patentansprüche

1. Wärmeversorgungssystem mit einem zentralen Pufferspeicher als Wärmespeicher für solare und fossil erzeugte Energie und als Wärmequelle für Trinkwasserbereitung, Heizungsunterstützung, Prozesswärme, Kühlanlagen oder Schwimmbadwassererwärmung, mit einem Ein- und Auslassstutzen für einen Solarkreislauf im unteren Höhenbereich des Pufferspeichers, mit einem Ein- und Auslassstutzen für einen Kreislauf über einen konventionellen Wärmeerzeuger im oberen Höhenbereich des Pufferspeichers, mit einem Kreislauf über eine Frischwasserstation mit einem Plattenwärmetauscher zur Trinkwasserbereitung und einem dafür vorgesehenen Auslassstutzen im oberen und einen Einlassstutzen im unteren Höhenbereich des Pufferspeichers, mit einem Ein- und Auslassstutzen für einen Heizungskreislauf im mittleren Höhenbereich, sowie mit einer Umgehungsleitung zur Umgehung des Pufferspeichers und direkten Überleitung der konventionell erzeugten Wärme in den Heizkreislauf, wobei in der Vorlaufleitung vom konventionellen Wärmeerzeuger zum Pufferspeicher ein erstes Umschaltventil und in der aus dem Pufferspeicher kommenden Vorlaufleitung für den Heizkreislauf ein zweites Umschaltventil mit Anschluss an die Umgehungsleitung vorgesehen ist, um die Wasserströmung wahlweise über den Pufferspeicher oder die Umgehungsleitung zu leiten,
**dadurch gekennzeichnet, dass** mindestens eine Verbindungsleitung mit einem Überströmventil (Ü, Ü') zwischen mindestens einer in den oder aus dem oberen Höhenbereich des Pufferspeichers (P) führenden Leitung, welche beim Betrieb der Frischwasserstation (F) zur Trinkwasserbereitung durchströmt wird, und der Vorlaufleitung (H_VL) für den Heizkreislauf vorgesehen ist.

2. Wärmeversorgungssystem nach Anspruch 1,
**dadurch gekennzeichnet, dass** eine Verbindungsleitung mit einem Überströmventil (Ü) zwischen der aus dem oberen Höhenbereich des Pufferspeichers (P) ausmündenden Vorlaufleitung (TW_VL) zur Frischwasserstation (F) und der Umgehungsleitung (U) vorgesehen ist.

3. Wärmeversorgungssystem nach Anspruch 1,
**dadurch gekennzeichnet, dass** stromabwärts hinter dem ersten Umschaltventil (V1) eine Verbindungsleitung mit einem Überströmventil (Ü') zwischen der in den oberen Höhenbereich des Pufferspeichers (P) einmündenden Vorlaufleitung (K_VL) des Kreislaufs über einen konventionellen Wärmeerzeuger und der Umgehungsleitung (U) vorgesehen ist.
